(19) **Europäisches Patentamt / European Patent Office / Office européen des brevets**

(11) **EP 3 880 556 B1**

(12) **FASCICULE DE BREVET EUROPEEN**

(45) Date de publication et mention
de la délivrance du brevet:
**20.04.2022 Bulletin 2022/16**

(21) Numéro de dépôt: **19845712.9**

(22) Date de dépôt: **18.12.2019**

(51) Classification Internationale des Brevets (IPC):
**B64G 1/50** *(2006.01)*

(52) Classification Coopérative des Brevets (CPC):
**B64G 1/503; B64G 1/506**

(86) Numéro de dépôt international:
**PCT/FR2019/053141**

(87) Numéro de publication internationale:
**WO 2020/128318 (25.06.2020 Gazette 2020/26)**

(54) **PROCÉDÉ DE FIXATION D'UN ÉQUIPEMENT DISSIPATIF, MUR DE VÉHICULE SPATIAL ET VÉHICULE SPATIAL**

VERFAHREN ZUR BEFESTIGUNG EINES WÄRMEABFÜHRENDEN TEILS EINER AUSRÜSTUNG, RAUMFAHRZEUGWAND UND RAUMFAHRZEUG

METHOD FOR ATTACHING A HEAT-DISSIPATING PIECE OF EQUIPMENT, SPACECRAFT WALL AND SPACECRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2018 FR 1873211**

(43) Date de publication de la demande:
**22.09.2021 Bulletin 2021/38**

(73) Titulaire: **Airbus Defence and Space SAS**
**31402 Toulouse Cedex 4 (FR)**

(72) Inventeur: **WALKER, Andrew**
**31402 TOULOUSE (FR)**

(74) Mandataire: **Plasseraud IP**
**66, rue de la Chaussée d'Antin**
**75440 Paris Cedex 09 (FR)**

(56) Documents cités:
**FR-A1- 2 735 565       US-A- 5 735 489**
**US-A1- 2013 233 516     US-A1- 2015 122 454**

EP 3 880 556 B1

# Description

L'invention se situe dans le domaine des véhicules spatiaux et en particulier dans le domaine du refroidissement de la charge utile des véhicules spatiaux.

Les véhicules spatiaux comportent un grand nombre d'équipements électroniques constituant la charge utile. Lorsque ces équipements électroniques fonctionnent, ils dissipent de la chaleur. Cette chaleur est transportée par des caloducs capillaires vers des radiateurs qui l'évacuent dans l'espace. Or, dans l'espace, le vide ou plus exactement l'absence d'atmosphère est non conducteur. En conséquence, même un espace très faible entre un équipement électronique et un caloduc capillaire peut empêcher le transfert de chaleur entre eux.

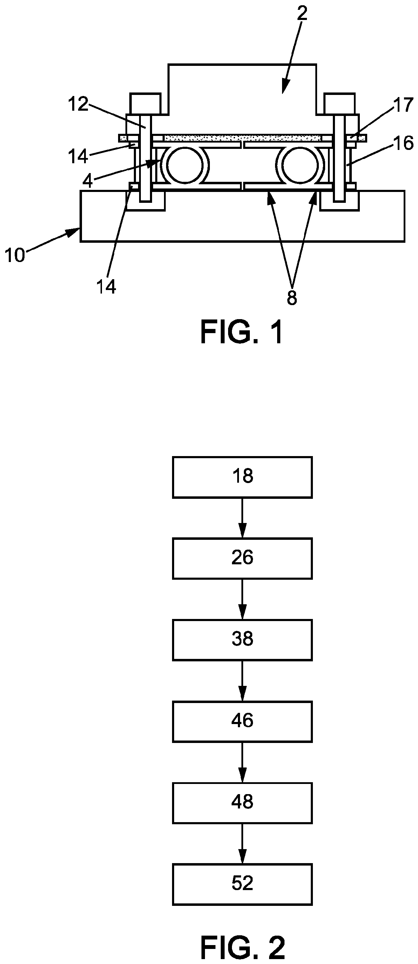

Pour assurer une bonne conduction thermique entre les équipements électroniques 2 et les caloducs capillaires 4, un produit de remplissage conducteur thermique est nécessaire pour permettre un passage continu de la chaleur entre eux. Le produit de remplissage est disposé entre l'équipement électronique et le caloduc capillaire, comme représenté sur la figure 1. Dans l'industrie spatiale, deux types de produit de remplissage conducteur thermique sont largement utilisés:

- Un produit de remplissages de type « à sec » constitué d'une feuille de matériau thermo-conducteur. Par exemple, une feuille de matériau thermo-conducteur de marque déposé « Sigraflex », ou une feuille constituée de graphite comprimé de marque déposé « e-graf » peut être utilisé.
- Un produit de remplissage de type « liquide » - typiquement des résines de silicone qui sont appliquées par voie liquide, puis durcissent pour former une masse solide.

Les produits de remplissage de type graisse, qui restent dans un état de fluide ou de pâte, sont largement utilisés pour les applications terrestres, mais ils ne sont généralement pas utilisés dans les applications spatiales en raison de problèmes de contamination. Un exemple d'une installation utilisant un produit de remplissage de type « à sec » est décrit ci-dessous. Ce procédé est long et complexe. En effet, ce procédé comporte tout d'abord une étape de découpage de plaquettes dans des bandes de graphite, aux dimensions des différents équipements électroniques 2.

Comme représenté sur la figure 1, des caloducs capillaires 4 ayant de larges bords latéraux 8 sont généralement montés sur les panneaux 10 de l'engin spatial. Ces caloducs capillaires 4 comportent des orifices de fixation 14 à des emplacements de fixation prévus. Les trous de montage doivent être préparés avant l'installation du caloduc sur l'engin spatial. La préparation des trous de montage est effectuée par le fournisseur de caloduc ou par le constructeur de l'engin spatial. La préparation des trous de montage représente une charge de travail importante. Le fabricant de satellites doit préparer un dessin qui précise le nombre et l'emplacement des points de fixation. Le caloduc est usiné conformément au dessin et, enfin, le caloduc est installé sur l'engin spatial, prêt pour l'installation de l'équipement électronique. Cela signifie que chacun des caloducs usinés est spécifique à une position particulière de l'engin spatial, c'est-à-dire qu'ils sont tous uniques et que la position des trous ne peut pas être normalisée.

En cas de déplacement d'un composant électronique 2 ou en cas de remplacement d'un composant électronique par un autre ayant une dimension différente, de nouveaux caloducs 4 doivent être commandés. Ces étapes complexifient et rallongent la durée de fabrication de l'engin spatial.

Dans une installation de type « à sec », des plaquettes de graphite 6 sont écrasées contre la surface de l'équipement électronique 2 et contre la surface du caloduc capillaire 4 afin que le carbone essaye de remplir les microrugosités de ceux-ci.

Pour assurer cet écrasement, l'espacement entre la face supérieure du caloduc capillaire 4 et la face supérieure de l'entretoise 16 doit correspondre très exactement à un espacement prédéfini. Cet espacement est mesuré pour chaque point de fixation par un opérateur à l'aide d'un gabarit. Cet espacement est contrôlé avec précision en utilisant l'addition d'une ou plusieurs rondelles 17 de 50 $\mu$m d'épaisseur. Ce processus, réalisé manuellement, est long et fastidieux. Par ailleurs, pour assurer l'écrasement des plaquettes de carbone dans les microrugosités des équipements électroniques 2 et des caloducs 4, une force importante est appliquée sur les vis de fixation 12. Cette force importante génère des tensions qui ont pour conséquence de courber légèrement le composant électronique 2, le caloduc 4 et le panneau 10 même si ceux-ci sont réalisés dans des matériaux raides tel que l'aluminium.

En raison de ces courbures, l'espacement entre l'équipement électronique et le caloduc n'est pas constant et la conduction thermique n'est pas assurée sur toute la surface des équipements électroniques 2. En conséquence, la conduction thermique globale n'est pas très élevée.

Pour augmenter la conduction thermique, les constructeurs de véhicules spatiaux ont donc augmenté le nombre de points de fixation. Or, comme décrit précédemment, la mise en place de ses points de fixation est longue et complexe, et requiert plus de trous de montage dans les caloducs.

Enfin, pour certains composants électroniques tels que par exemple les multiplexeurs de sortie (en anglais « output multiplexer »), le nombre important de points de fixation et la distorsion du composant électronique qui en résulte a un effet direct sur les performances et peut modifier la résonnance des cavités et peut détériorer la qualité du signal transmis.

Des exemples des panneaux d'un véhicule spatial sont connus par les documents US2015/122454 A1, US2013/233516 A1, US5735489 A et FR2735565 A1.

La présente invention vient remédier à ces inconvénients.

**Résumé de l'invention**

La présente invention a pour premier but de proposer un procédé de fixation d'un équipement dissipatif et d'un caloduc capillaire à un panneau de véhicule spatial, plus rapide et plus simple.

La présente invention a pour deuxième but de proposer un procédé de fixation utilisant un plus grand nombre de composants standards.

La présente invention a pour troisième but de proposer un procédé de fixation moins couteux.

La présente invention a pour quatrième but de proposer un mur de véhicule spatial présentant une meilleure conduction thermique entre les composants électroniques et les caloducs.

A cet effet, la présente invention propose un procédé de fixation d'un équipement dissipatif et d'un caloduc capillaire à un panneau d'un mur de véhicule spatial, ledit procédé comportant les étapes suivantes :

a) agencer au moins un caloduc capillaire sur au moins une partie du panneau,

b) fixer des corps de fixation femelles au panneau, les corps de fixation femelles s'étendant en saillie par rapport à ledit au moins un caloduc capillaire,

c) placer une pâte thermo-conductrice et auto-durcissante sur au moins une partie du au moins un caloduc capillaire ou sur au moins un équipement dissipatif,

d) poser au moins un équipement dissipatif sur la pâte thermo-conductrice et auto-durcissante et sur les corps de fixation femelles, ledit équipement dissipatif étant en appui sur les corps de fixation femelles, ledit équipement dissipatif étant en contact direct avec les corps de fixation femelles, et

e) fixer l'équipement dissipatif et ledit au moins un caloduc capillaire au panneau en fixant des éléments de fixation mâle aux corps de fixation femelles.

Les caractéristiques exposées dans les paragraphes suivants peuvent, optionnellement, être mises en œuvre. Elles peuvent être mises en œuvre indépendamment les unes des autres ou en combinaison les unes avec les autres :

- la pâte thermo-conductrice comprend une résine silicone contenant de la poudre d'alumine.

- le corps de fixation mâle comprend un goujon et au moins un boulon.

- l'étape de pose de la pâte thermo-conductrice sur le caloduc capillaire est mise en oeuvre par le dépôt de gouttes ou d'un filet de pâte thermo-conductrice, et dans lequel la quantité de pâte thermo-conductrice déposée sur le au moins un caloduc capillaire est au moins une fois et demi supérieure à la quantité de pâte thermo-conductrice uniquement nécessaire au remplissage de l'espace situé entre le caloduc capillaire et l'équipement dissipatif.

- le procédé comporte en outre une étape d'attente que la viscosité de la pâte thermo-conductrice augmente jusqu'à une valeur seuil.

- le caloduc capillaire comprend un tube creux et deux plaques de support disposées de part et d'autre du tube creux et dans lequel lesdites plaques de support présentent une largeur sensiblement égale au diamètre du tube creux.

- les corps de fixation femelles sont fixés au panneau de manière à s'étendre en saillie par rapport à ledit au moins un caloduc capillaire selon une direction perpendiculaire à une face principale du panneau.

- le corps de fixation femelle comprend au moins un insert fileté.

- le corps de fixation femelle comprend en outre une entretoise comportant un canal creux, ladite entretoise étant disposée dans le prolongement axial de l'insert fileté.

- la pâte thermo-conductrice comprend un composant parmi un composant de marque déposée « Nusil CV2946 » et un composant de marque déposée MAPSIL TA66.

Selon un autre aspect, L'invention concerne également un mur de véhicule spatial comprenant :

- un panneau,
- au moins un caloduc capillaire agencé sur au moins une partie du panneau,
- des corps de fixation femelles fixés au panneau de manière à s'étendre en saillie par rapport à ledit au moins un caloduc capillaire,
- au moins un équipement dissipatif porté par et en contact direct avec lesdits corps de fixation femelles,
- une couche de pâte thermo-conductrice et auto-durcissante agencée entre ledit au moins un caloduc capillaire et l'équipement dissipatif, et
- un élément de fixation mâle propre à fixer ledit équipement dissipatif au corps de fixation femelle

Les caractéristiques exposées dans les paragraphes suivants peuvent, optionnellement, être mises en œuvre. Elles peuvent être mises en œuvre indépendamment les unes des autres ou en combinaison les unes avec les autres :

- la pâte thermo-conductrice comprend une résine silicone contenant de la poudre d'alumine.

- le corps de fixation mâle comprend un goujon et au moins un boulon.

- ledit au moins un caloduc capillaire comprend un tube creux et deux plaques de support disposées de part et d'autre du tube creux, et dans lequel lesdites plaques de support présentent une largeur sensiblement égale au diamètre du tube creux.

- le corps de fixation femelle s'étend en saillie par rapport à ledit audit au moins un caloduc capillaire selon une direction perpendiculaire à une face principale du panneau.

- le corps de fixation femelle comprend au moins un insert fileté.

- le corps de fixation femelle comprend une entretoise comportant un canal creux, ladite entretoise et s'étendant en saillie par rapport aux plaques de support dudit caloduc capillaire étant disposée dans le prolongement axial de l'insert fileté.

- la pâte thermo-conductrice comprend un composant parmi un composant de marque déposée « Nusil CV2946 » et un composant de marque déposée MAPSIL TA66.

- ledit équipement dissipatif est un équipement parmi un amplificateur, un composant électronique radiofréquence, un composant électronique digital, un processeur, une alimentation en puissance électrique.

L'invention concerne également un véhicule spatial comprenant au moins un mur de véhicule spatial conformé selon les caractéristiques mentionnées ci-dessus.

Avantageusement, le goujon s'adapte à une grande variété de distances de fixation. Il permet de ne pas avoir à gérer un grand nombre de vis de tailles différentes. L'utilisation de goujon simplifie le montage et accélère la vitesse de fabrication du véhicule spatial. L'utilisation de goujon simplifie le travail d'achat et de gestion des pièces de montage.

En variante, le corps de fixation mâle comprend une vis.

Avantageusement, le débordement de pâte permet de vérifier visuellement que la pâte conductrice n'a pas été oubliée et qu'une quantité suffisante de pâte thermo-conductrice a été appliquée pour couvrir l'ensemble de la surface du caloduc. Comme l'ensemble de la surface du caloduc et de l'équipement dissipatif est recouvert de la pâte thermo-conductrice, la conduction thermique est améliorée entre l'équipement dissipatif et le caloduc.

Avantageusement, l'utilisation de caloduc sans bords latéraux permet de ne plus commander de caloducs avec des orifices de fixation aux bons emplacements. Le procédé de fixation est ainsi simplifié. Avantageusement, le temps de fabrication d'un véhicule spatial est ainsi diminué.

**Brève description des dessins**

D'autres caractéristiques, détails et avantages de l'invention apparaîtront à la lecture de la description détaillée ci-après, et à l'analyse des dessins annexés, sur lesquels :

**Fig. 1**
[Fig. 1] est une vue schématique en coupe d'un mur de véhicule spatial selon l'état de la technique, ladite coupe étant réalisée au niveau des vis de fixation d'un composant électronique ;

**Fig. 2**
[Fig. 2] est un diagramme des étapes de fixation du procédé selon un premier mode de réalisation de l'invention;

**Fig. 3**

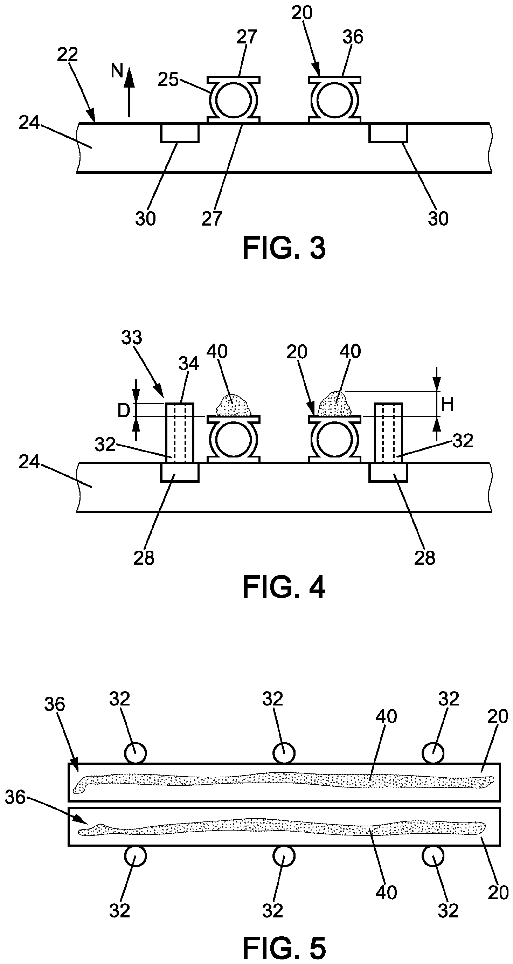

[Fig. 3] est une vue schématique en coupe d'un mur de véhicule spatial au cours d'une étape intermédiaire selon le procédé de fixation illustré sur la figure 2 ;

**Fig. 4**
[Fig. 4] est une vue schématique perspective d'un mur de véhicule spatial au cours d'une autre étape intermédiaire selon le procédé de fixation illustré sur la figure 2 ;

**Fig. 5**
[Fig. 5] est une vue schématique de dessus de deux caloducs capillaires au cours d'une étape du procédé de fixation selon l'invention ;

**Fig. 6**

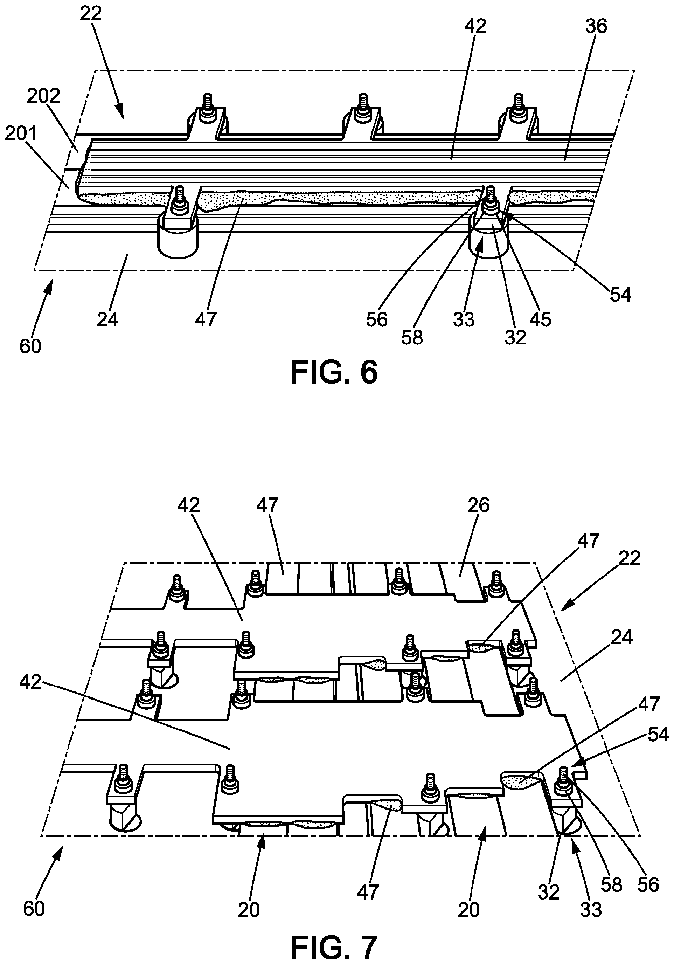

[Fig. 6] est une vue en perspective d'un exemple d'une partie d'un mur de véhicule ;

**Fig. 7**
[Fig. 7] est une vue en perspective d'un autre exemple d'une partie d'un mur de véhicule ;

**Fig. 8**

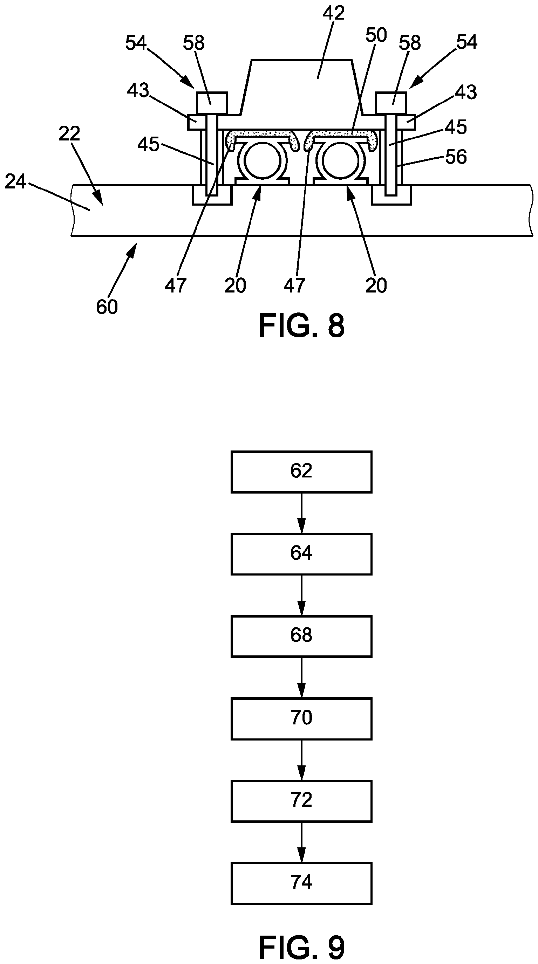

[Fig. 8] est une vue schématique en coupe d'un mur de véhicule spatial selon un premier mode de réalisation de l'invention, ledit mur étant fabriqué selon le procédé illustré sur la figure 2 ;

**Fig. 9**
[Fig. 9] est un diagramme des étapes du procédé de fixation selon un deuxième mode de réalisation de l'invention ;

**Fig. 10**

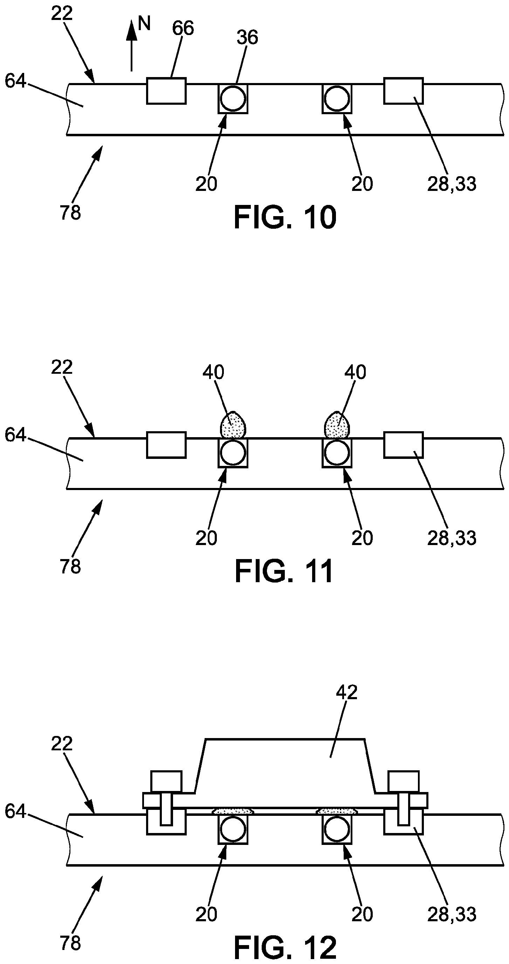

[Fig. 10] est 10 est une vue schématique en coupe d'un mur de véhicule spatial au cours d'une étape intermédiaire du procédé de fixation illustré sur la figure 9 ;

**Fig. 11**

[Fig. 11] est une vue schématique en coupe d'un mur de véhicule spatial au cours d'une autre étape intermédiaire du procédé de fixation illustré sur la figure 9 ;

**Fig. 12**

[Fig. 12] est une vue schématique en coupe d'un mur de véhicule spatial selon un deuxième mode de réalisation de l'invention, ledit mur étant fabriqué selon le procédé illustré sur la figure 9;

**Fig. 13**

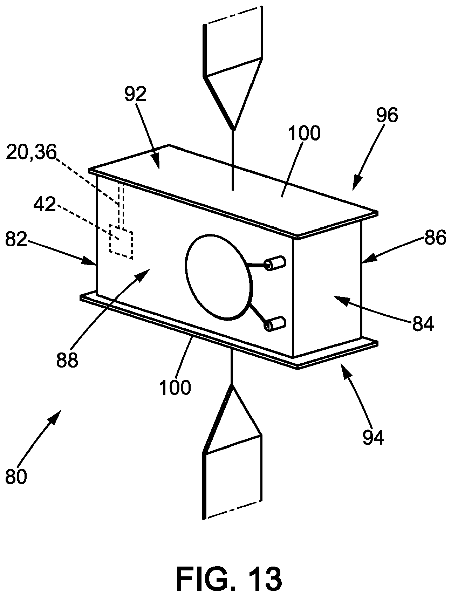

[Fig. 13] est une vue schématique d'un véhicule spatial comportant un mur selon la présente invention.

**Description des modes de réalisation**

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Par convention, dans la description qui va suivre, , les termes « inférieur », « supérieur », « droite » et « gauche » sont définis lorsque le mur du véhicule spatial selon l'invention est disposé comme illustré sur la figure 5, et sont nullement limitatifs.

En référence aux figures 2 et 3, le procédé de fabrication selon le premier mode de réalisation de l'invention débute par une étape 18 au cours de laquelle des caloducs capillaires 20, par exemple deux caloducs capillaires 20, sont agencés sur une face principale 22 d'un panneau 24 généralement utilisé dans la fabrication d'un mur de véhicule spatial. Les caloducs capillaires 20 sont agencés parallèlement l'un à l'autre et de préférence, l'un à côté de l'autre. Les caloducs capillaires 20 sont destinés à recevoir un fluide caloporteur propre à transmettre de la chaleur vers les radiateurs du véhicule spatial.

Les caloducs capillaires 20 comprennent un tube creux 25 et deux plaques de support 27 disposées parallèlement l'une à l'autre de part et diagonalement opposée. Les plaques de support 27 ont la forme d'une planche ayant une longueur égale à la longueur du tube creux 25.

Préférentiellement, les plaques de support 27 ont une largeur sensiblement égale au diamètre du tube creux 25. Elles ne se prolongent pas par des bords latéraux 8, comme les caloducs capillaires généralement utilisés dans l'état de la technique. Ainsi, les plaques de support 27 n'interfèrent pas avec les fixations. Elles n'ont pas de trous et elles ont la même largeur sur toute leur longueur.

Au cours d'une étape 26, des corps de fixation femelles 33 sont fixés au panneau 24. Dans le premier mode de réalisation, les corps de fixation femelles 33 comprennent deux inserts filetés 28 montés dans un orifice 30 du panneau 24 et deux entretoises 32 posées sur les inserts filetés 28.

Les inserts filetés 28 présentent la forme d'une douille ayant un canal central pourvu d'un filetage. En variante, le trou fileté est directement réalisé dans le panneau 24.

Chaque entretoise 32 est pourvue d'un canal traversant disposé dans le prolongement axial de de chaque insert fileté 28. La hauteur des entretoises 32 et/ou la profondeur d'insertion des inserts filetés 28 dans le panneau 24 est établie de sorte que la face supérieure 34 des entretoises s'étende en saillie par rapport à la face supérieure 36 des caloducs selon une direction N. La direction N étant perpendiculaire à la face principale 22 du panneau. Ainsi, une différence de hauteur D comprise entre 0.2 et 0.5 millimètre est préférentiellement mise en place entre la face supérieure 34 des entretoises et la face supérieure 36 des caloducs. En variante, l'étape 26 est réalisée avant l'étape 18.

Au cours d'une étape 38 illustrée sur les figures 2, 4 et 5, une pâte thermo-conductrice 40 est posée sur au moins une partie des caloducs capillaires 20.

De préférence, la pâte thermo-conductrice 40 est disposée sous la forme d'une coulure ou d'un filet s'étendant longitudinalement sur une partie de la face supérieure 36 de chaque caloduc capillaire 20. La pâte thermo-conductrice est appliquée, par exemple, à l'aide d'un pistolet ou d'une poche munie d'un embout conique ouvert à son extrémité. Avantageusement, il y a un excès de pâte thermo-conductrice de sorte que lorsque l'équipement dissipatif sera appliqué sur la pâte, une partie de la pâte sortira sur les côté de l'équipement dissipatif. Avantageusement, la quantité de pâte thermo-conductrice 40 déposée sur chaque caloduc capillaire 20 est au moins une fois et demi supérieure, et de préférence au moins deux fois, à la quantité de pâte thermo-conductrice 40 uniquement nécessaire au remplissage de l'espace situé entre le caloduc capillaire 20 et l'équipement dissipatif 42. Cette quantité de pâte thermo-conductrice uniquement nécessaire au remplissage de l'espace situé entre le caloduc capillaire 20 et l'équipement dissipatif 42 peut être calculée pour chaque caloduc capillaire à partir de la formule suivante :

$$Vr = D \times l \times L$$

dans laquelle :

Vr est la quantité nécessaire,

D est la différence de hauteur D entre la face supérieure 34 des entretoises et la face supérieure 36 du caloduc,

I est la largeur du caloduc, et

L est la longueur du caloduc.

Selon une variante non représentée, la pâte thermo-conductrice 40 est disposée sous la forme de gouttelettes distribuées sur la face supérieure 36. Dans ce cas également, la hauteur H de ces gouttelettes de pâte est, par exemple, comprise entre 0.3 et 0.7 millimètre. De préférence, la hauteur H de ces gouttelettes de pâte est sensiblement égale à 0.5 millimètre.

Pour simplifier son installation, la pâte thermo-conductrice 40 est de préférence thixotrope. En particulier, la viscosité de la pâte thermo-conductrice 40 augmente au cours du temps et devient éventuellement solide. Ainsi, la pâte thermo-conductrice 40 une pâte auto-durcissante.

La pâte thermo-conductrice 40 comprend typiquement une résine silicone ou une autre résine thermodurcissable.

Avantageusement, cette résine silicone contient de la poudre d'alumine ou un autre matériau thermiquement conducteur afin de fournir une conductivité thermique élevée.

Avantageusement, la pâte thermo-conductrice 40 présente une conductivité thermique supérieure à 0,5 Watt par mètre Kelvin (W/m/K).

Par exemple, la pâte thermo-conductrice 40 est un composant de marque déposée « Nusil CV2946 ». Selon un autre exemple, la pâte thermo-conductrice 40 est un composant de marque déposée MAPSIL TA66.

En variante, la pâte thermo-conductrice 40 est posée sur la face inférieure de l'équipement dissipatif 42.

Après le dépôt de la pâte thermo-conductrice 40, au cours d'une étape 46, un équipement dissipatif 42 est placé sur la pâte thermo-conductrice 40 et sur les corps de fixation femelles 33. Cette étape doit être effectuée tant que la pâte est encore capable de s'écouler, c'est-à-dire avant que la pâte ne soit complètement durcie.

Cet équipement dissipatif 42 est constitué par tout type d'équipement qui génère de la chaleur et qui est généralement monté sur les panneaux d'un véhicule spatial. Cet équipement dissipatif 42 peut-être un composant électronique tel que par exemple, un amplificateur, un composant électronique radiofréquence, un composant électronique digital, un processeur, une alimentation en puissance électrique.

Cet équipement dissipatif 42 comporte des bords ou des pattes de fixation 43 équipé(e)s de trous 45 de fixation traversants. L'équipement dissipatif 42 est placé de manière à ce que ces bords ou pattes de fixation 43 soient positionné(e)s au droit des corps de fixation femelles 33.

Lorsque l'équipement dissipatif 42 est posé sur les corps de fixation femelles 33, en raison de son poids et de la tension dans les boulons, l'équipement dissipatif 42 écrase la pâte thermo-conductrice 40 sur la face supérieure 36 du caloduc capillaire. La pâte thermo-conductrice 40 se répartie sur une grande partie de la face supérieure 36 des caloducs capillaires 20 jusqu'à ce que la face supérieure de la couche thermo-conductrice 50 soit au même niveau que la face supérieure des entretoises 32 et l'équipement dissipatif 42 soit en appui sur les corps de fixation femelles 33.

L'équipement dissipatif 42 est en contact direct avec les corps de fixation femelles 33. En particulier, dans ce mode de réalisation, l'équipement dissipatif 42 est en appui et en contact direct avec les entretoises 32.

Comme la quantité de pâte thermo-conductrice déposée sur la face supérieure du caloduc est supérieure à la quantité de pâte uniquement nécessaire au remplissage de l'espace entre les caloducs capillaires 20 et l'équipement dissipatif 42, la pâte thermo-conductrice 40 déborde de part est d'autre de l'équipement dissipatif 42, comme visible sur les figures 6 et 7. Ce débordement 47 permet avantageusement de vérifier visuellement qu'une quantité suffisante de pâte thermo-conductrice 40 a été utilisée pour recouvrir sensiblement toute la surface de la face supérieure 36 de l'équipement dissipatif.

Ainsi, avantageusement, la hauteur de la couche thermo-conductrice 50 s'est ajustée de manière autonome à la différence de hauteur entre la face supérieure 34 des corps de fixation femelles 33 et la face supérieure 36 des caloducs capillaires 20.

La couche 50 de pâte thermo-conductrice compense exactement la différence de hauteur D établie entre la face supérieure 34 des entretoises et la face supérieure 36 des caloducs. Ainsi, le procédé de fabrication selon l'invention permet de garantir que la pâte thermo-conductrice 40 soit bien intégrée aux micro-rugosités de la face supérieure 36 des caloducs capillaires et aux microrugosités de la face inférieure de l'équipement dissipatif 42.

Au cours d'une étape 48, l'ensemble équipement dissipatif 42, couche thermo-conductrice 50 et caloducs capillaires 20 est alors fixé au panneau 24 à l'aide d'éléments de fixation mâles 54, comme visible sur la figure 8.

Le procédé de fixation se poursuit par une étape d'attente 52 au cours de laquelle la viscosité de la pâte thermo-conductrice 40 augmente et l'adhérence de la pâte thermo-conductrice augmente. Cette étape peut par exemple durer deux semaines. Lorsque la pâte thermo-conductrice 40 a un peu durci, elle forme une couche 50 de pâte thermo-conductrice qui adhère aux caloducs capillaires 20 et à l'équipement dissipatif 42 de sorte que les caloducs capillaires 20 et l'équipement dissipatif 42 soient solidaires.

En particulier, l'adhérence de la couche thermo-conductrice 50 est suffisamment forte pour que les caloducs capillaires 20 et l'équipement dissipatif 42 forment en ensemble solidaire, et suffisamment faible pour permettre un éventuel décollement ultérieur de l'équipement dissipatif 42 par rapport aux caloducs capillaires 20. Ce décollement peut être effectué pour déplacer ou remplacer un équipement dissipatif 42 par exemple suite à une modification de la conception du mur de véhicule spatial.

Selon un mode de réalisation préférentiel, chaque élément de fixation mâle 54 comprend un goujon 56 et un boulon 58. Le goujon 56 est engagé dans le trou traversant 45 d'une patte de fixation 43 de l'équipement dissipatif et dans le canal traversant de l'entretoise 32. Puis, le goujon 56 est vissé dans l'insert fileté 28. Un boulon 58 est vissé sur l'extrémité libre du goujon 56.

Selon la présente invention, le corps de fixation mâle 54 sert uniquement à fixer l'ensemble équipement dissipatif 42, couche thermo-conductrice 50 et caloducs capillaires 20 au panneau 24. Il n'a pas pour fonction d'écraser la couche thermo-conductrice 50. Pour cette raison, le nombre de points de fixation d'un équipement dissipatif 42 peut donc être faible.

Avantageusement, l'utilisation d'un goujon 56 et d'un boulon 58 permet de s'adapter à une grande variété de hauteurs de fixation. En conséquence, il n'est pas nécessaire de commander des vis de différentes tailles. Le nombre de pièces de montage est diminué. Le travail d'achat et de gestion des pièces de montage est simplifié.

En variante, le corps de fixation mâle 54 comprend une vis.

Avantageusement, comme les caloducs capillaires 20 sont situés uniquement entre les corps de fixation femelles 33, les caloducs capillaires 20 ne comportent pas de trous de fixation de sorte que des caloducs « standards » peuvent être montés entre les équipements dissipatifs et les panneaux 24. En conséquence, il n'est plus nécessaire de commander des caloducs sur mesure et de gérer un stock de caloducs capillaires ayant des trous de fixation à différents endroits.

La présente invention concerne également un mur 60 de véhicule spatial obtenu en réalisant les étapes du procédé de fabrication selon le premier mode de réalisation décrit ci-dessus.

En référence à la figure 8, le mur 60 du véhicule spatial selon la présente invention comporte un panneau 24, deux caloducs capillaires 20 agencés sur la face principale 22 du panneau, une couche 50 de pâte thermo-conductrice posée sur chaque caloduc capillaire 20 et un équipement dissipatif 42 agencé sur les couches 50 de pâte thermo-conductrice. Ainsi la une couche 50 de pâte thermo-conductrice est interposée entre chaque caloduc capillaire 20 et l'équipement dissipatif 42.

Comme dit précédemment, les caloducs capillaires 20 comprennent un tube creux 25 et deux plaques de support 27 disposées parallèlement l'une à l'autre et diamétralement opposé. Les plaques ont préférentiellement une largeur sensiblement égale au diamètre du tube creux 25.

Les caloducs capillaires 20 sont adjacents et parallèles. Ils sont situés sur la face principale 22 du panneau 24.

Comme dit précédemment, l'équipement dissipatif 42 comporte des bords ou pattes de fixation 43 équipé(e)s de trous 45 de fixation traversants. Ces bords ou pattes de fixation 43 sont en porte à faux par rapport à l'empilement comprenant les caloducs capillaires 20, les couches 50 de pâte thermo-conductrice et l'équipement dissipatif 42.

Le mur 60 du véhicule spatial comporte également des corps de fixation femelle 33 et des éléments de fixation mâle 54. Les corps de fixation femelles 33 comportent chacun un insert fileté 28 fixé dans le trou non traversant 30 du panneau et une entretoise 32 pourvue d'un canal traversant disposé dans le prolongement axial de chaque insert fileté.

Chaque élément de fixation mâle 54 comporte un goujon 56 ayant une extrémité vissée dans l'insert fileté 28 et un boulon 54 vissé dans l'autre extrémité du goujon. Le goujon 56 traverse également le trou traversant 45 de l'équipement dissipatif 42 et le canal creux de l'entretoise 32. L'équipement dissipatif 42 est en appui et en contact direct avec le corps de fixation femelle 33, et plus précisément, avec l'entretoise 32. Il n'y a pas de pâte thermo-conductrice entre l'équipement dissipatif 42 et l'entretoise 32.

En variante, le nombre de corps de fixation femelle 33 et le nombre de fixation mâle 54 de l'équipement dissipatifs est supérieur à deux.

En variante, le nombre de caloducs capillaires 20 disposés sous l'équipement dissipatifs est supérieur à deux.

Ainsi, dans l'exemple illustré sur la figure 6, le mur 60 comprend un premier caloduc capillaire 201, un deuxième caloduc capillaire 202 et un équipement dissipatif 42 disposé selon une même direction longitudinale que les caloducs capillaires 201, 202. Cet équipement dissipatif 42 est attaché au panneau 24 par deux ensembles de fixation mâles-femelles 33, 54 fixés d'un côté de l'équipement dissipatif, et le long d'un bord périphérique du premier caloduc et trois ensembles de fixation mâles-femelles 33, 54 fixés de l'autre côté de l'équipement dissipatif et le long d'un bord périphérique du deuxième caloduc 202.

Dans l'exemple illustré sur la figure 7, le mur 60 comprend cinq caloducs capillaires 20 et deux équipement dissipatifs 42 disposés transversalement par rapport à l'axe longitudinal des caloducs capillaires 20. Chaque équipement dissipatif 42 est attaché au panneau 24 par trois ensembles de fixation mâles-femelles 33, 54 fixés d'un côté de l'équipement dissipatif, et trois ensembles de fixation mâles-femelles 33, 54 fixés de l'autre côté de l'équipement dissipatif.

En référence aux figures 9 et 10, le procédé de fabrication selon le deuxième mode de réalisation de l'invention débute par une étape 62 au cours de laquelle deux caloducs capillaires 20 sont montés dans un panneau 64 d'un véhicule spatial. En particulier, selon ce deuxième mode de réalisation, le panneau 64 est un panneau 64 en nid d'abeille. Les caloducs capillaires 20 sont agencés dans des canaux réalisés dans le panneau 64. La face supérieure 34 des caloducs capillaires affleure la face principale 22 du panneau 24. Les caloducs capillaires 20 sont parallèles l'un à l'autre et de préférence, l'un à côté de l'autre.

Au cours d'une étape 64, deux inserts filetés 28 sont fixés dans un orifice non débouchant 30 du panneau 24. La profondeur d'insertion des inserts filetés 28 dans le panneau 24 est établie de sorte que la face supérieure 66 des inserts filetés s'étende au-dessus des caloducs. Ainsi, une différence de hauteur D comprise entre 0.2 et 0.5 millimètre est préférentiellement mise en place entre la face supérieure 66 des inserts filetés et la face supérieure 36 des caloducs.

Au cours d'une étape 68 illustrée sur les figures 9 et 11, une pâte thermo-conductrice 40 est disposée sur au moins une partie des caloducs capillaires 20. Au cours d'une étape 70, un équipement dissipatif 42 est placé sur la pâte thermo-conductrice 40 et sur les corps de fixation femelles 33.

Les étapes 68 et 70 sont identiques à l'étape 38 et respectivement à l'étape 46 selon le premier mode de réalisation et ne seront pas décrites en détail une seconde fois.

Au cours d'une étape 72 illustrée sur les figures 9 et 12, l'équipement dissipatif 42 est fixé au panneau 64 à l'aide d'au moins un élément de fixation mâle 54. Chaque élément de fixation mâle 54 comprend un goujon 56 et un boulon 58. Le goujon 56 est engagé dans le trou traversant 45 d'un bord ou d'une patte de fixation 43 de l'équipement dissipatif et est vissé dans l'insert fileté 28. Un boulon 58 est vissé sur l'extrémité libre du goujon 56.

Le procédé se poursuit par une étape d'attente 74 identique à l'étape 52 du procédé selon le premier mode de réalisation.

Le mur 78 de véhicule spatial selon le deuxième mode de réalisation de l'invention est obtenu en réalisant les étapes du procédé de fabrication selon le deuxième mode de réalisation de l'invention.

Le mur 78 de véhicule spatial selon le deuxième mode de réalisation est similaire au mur 60 de véhicule spatial selon le premier mode de réalisation à l'exception du fait que :

le panneau 64 est un panneau en nid d'abeille,
les caloducs capillaires 20 sont agencés à l'intérieur du panneau 64 avec leur face supérieure 24 affleurant la face supérieure 22 du panneau,
les corps de fixation femelles 33 ne comportent pas d'entretoise 32, et
la profondeur d'insertion des inserts filetés 28 dans le panneau 24 est établie de sorte que la face supérieure 66 des inserts filetés s'étende au-dessus des caloducs avec une différence de hauteur D comprise entre 0.2 et 0.5 millimètre.

En référence à la figure 13, le véhicule spatial 80 selon l'invention se présente sous la forme d'une caisse parallélépipédique comprenant :

- un mur 82 dirigé vers la Terre, et souvent appelé la face Terre 82,
- un mur 84 opposé et parallèle au mur 82 et généralement appelé face anti- Terre,
- un mur 86, appelée face Est, est perpendiculaires à la direction de déplacement de l'engin spatial 80,
- un mur 88 opposé au mur 86, appelée face Ouest,
- un mur 92, appelée face Nord 92, et perpendiculaire à l'axe Nord-Sud de la Terre, et
- un mur 94 opposé au mur 92.

Les faces extérieures et intérieures des murs 82, 84, 86, 88, 92 et 94, portent des équipements dissipatifs 42 et des caloducs capillaires 20,64 contenus dans la caisse. Un seul équipement dissipatif 42 et un seul caloduc ont été représenté schématiquement pour simplifier la figure.

Les murs 92 et 94 portent des radiateurs 100 reliés thermiquement aux équipements

## Revendications

1. Procédé de fixation d'un équipement dissipatif (42) et d'un caloduc capillaire (20,201,202) à un panneau (24,64) d'un mur (60,78) de véhicule spatial, ledit procédé comportant les étapes suivantes :

   a) agencer (18,62) au moins un caloduc capillaire (20,36) sur au moins une partie du panneau (24,64);
   b) fixer (26,64) des corps de fixation femelles (33) au panneau (24,64), les corps de fixation femelles (33) s'étendant en saillie par rapport à ledit au moins un caloduc capillaire (20,36) ;
   c) placer (38, 68) une pâte (40) thermo-conductrice et auto-durcissante sur au moins une partie du au moins un caloduc capillaire (20,36) ou sur au moins un équipement dissipatif (42),
   d) poser (46, 70) au moins un équipement dissipatif (42) sur la pâte (40) thermo-conductrice et auto-durcissante et sur les corps de fixation femelles (33), ledit équipement dissipatif (42) étant en appui sur les corps de fixation femelles (33), ledit équipement dissipatif (42) étant en contact direct avec les corps de fixation femelles (33), et
   e) fixer (48, 72) l'équipement dissipatif (42) et ledit au moins un caloduc capillaire (20,36) au panneau (24, 64) en fixant des éléments de fixation mâle (54) aux corps de fixation femelles (33).

2. Procédé de fixation selon la revendication 1, dans lequel la pâte thermo-conductrice (40) comprend une résine silicone contenant de la poudre d'alumine.

3. Procédé de fixation selon l'une quelconque des revendications 1 et 2, dans lequel le corps de fixation mâle (54) comprend un goujon (56) et au moins un boulon (58).

4. Procédé de fixation selon l'une quelconque des revendications 1 à 3, dans lequel l'étape de pose (38, 68) de la pâte thermo-conductrice (40) sur le caloduc capillaire (24, 64) est mise en œuvre par le dépôt de gouttes ou d'un filet de pâte thermo-conductrice (40), et dans lequel la quantité de pâte thermo-conductrice (40) déposée sur le au moins un caloduc capillaire (20,36) est au moins une fois et demi supérieure à la quantité de pâte thermo-conductrice (40) uniquement nécessaire au remplissage de l'espace situé entre le caloduc capillaire (20,36) et l'équipement dissipatif (42).

5. Procédé de fixation selon l'une quelconque des revendications 1 à 4, qui comporte en outre une étape (52, 74) d'attente que la viscosité de la pâte thermo-conductrice (40) augmente jusqu'à une valeur seuil.

6. Procédé de fixation selon l'une quelconque des revendications 1 à 5, dans lequel les corps de fixation femelles (33) sont fixés au panneau (24) de manière à s'étendre en saillie par rapport à ledit au moins un caloduc capillaire (24,36) selon une direction (N) perpendiculaire à une face principale (22) du panneau (24, 64).

7. Mur (60, 78) de véhicule spatial comprenant :

    - un panneau (24,64),
    - au moins un caloduc capillaire (20,36) agencé sur au moins une partie du panneau (24,64),
    - des corps de fixation femelles (33) fixés au panneau (24,64) de manière à s'étendre en saillie par rapport à ledit au moins un caloduc capillaire (20,36),
    - au moins un équipement dissipatif (42) porté par et en contact direct avec lesdits corps de fixation femelles (33),
    - une couche (50) de pâte thermo-conductrice et auto-durcissante agencée entre ledit au moins un caloduc capillaire (20,36) et l'équipement dissipatif (42), et
    - un élément de fixation mâle propre à fixer ledit équipement dissipatif au corps de fixation femelle.

8. Mur (60, 78) de véhicule spatial selon la revendication 7, dans lequel la pâte thermo-conductrice (40) comprend une résine silicone contenant de la poudre d'alumine.

9. Mur (60, 78) de véhicule spatial selon l'une quelconque des revendications 7 et 8, dans lequel le corps de fixation mâle (54) comprend un goujon (56) et au moins un boulon (58).

10. Mur (60, 78) de véhicule spatial selon l'une quelconque des revendications 7 à 9, dans lequel ledit au moins un caloduc capillaire (20,36) comprend un tube creux (25) et deux plaques de support (27) disposées de part et d'autre du tube creux (25), et dans lequel lesdites plaques de support (27) présentent une largeur sensiblement égale au diamètre du tube creux (25).

11. Mur (60, 78) de véhicule spatial selon l'une quelconque des revendications 7 à 10, , dans lequel le corps de fixation femelle (33) s'étend en saillie par rapport à ledit audit au moins un caloduc capillaire selon une direction (N) perpendiculaire à une face principale (22) du panneau (24, 64).

12. Mur (60, 78) de véhicule spatial selon l'une quelconque des revendications 7 à 11, dans le corps de fixation femelle (33) comprend au moins un insert fileté (28).

13. Mur (60, 78) de véhicule spatial selon l'une quelconque des revendications 7 à 12, dans lequel ledit équipement dissipatif (42) est un équipement parmi un amplificateur, un composant électronique radiofréquence, un composant électronique digital, un processeur, une alimentation en puissance électrique.

14. Véhicule spatial comprenant au moins un mur (60, 78) de véhicule spatial conformé selon l'une quelconque des revendications 7 à 13.

**Patentansprüche**

1. Verfahren zur Befestigung eines wärmeabführenden Ausrüstungsteils (42) und eines kapillaren Wärmerohres (20, 201, 202) an einer Platte (24, 64) einer Raumfahrzeugwand (60, 78), wobei das Verfahren die folgenden Schritte umfasst:

    a) Anordnen (18, 62) mindestens eines kapillaren Wärmerohres (20, 36) auf mindestens einem Teil der Platte (24, 64);
    b) Befestigen (26, 64) von aufnehmenden Befestigungskörpern (33) an der Platte (24, 64), wobei sich die aufnehmenden Befestigungskörper (33) in Bezug auf das mindestens eine kapillare Wärmerohr (20, 36) vorstehend erstrecken;
    c) Anbringen (38, 68) einer wärmeleitenden und selbsthärtenden Paste (40) auf mindestens einem Teil des mindestens einen kapillaren Wärmerohres (20, 36) oder auf mindestens einem wärmeabführenden Ausrüstungsteil (42);

d) Aufsetzen (46, 70) mindestens eines wärmeabführenden Ausrüstungsteils (42) auf die wärmeleitende und selbsthärtende Paste (40) und auf die aufnehmenden Befestigungskörper (33), wobei sich das wärmeabführende Ausrüstungsteil (42) auf den aufnehmenden Befestigungskörpern (33) abstützt, wobei das wärmeabführende Ausrüstungsteil (42) in direktem Kontakt mit den aufnehmenden Befestigungskörpern (33) steht; und

e) Befestigen (48, 72) des wärmeabführenden Ausrüstungsteils (42) und des mindestens einen kapillaren Wärmerohres (20, 36) an der Platte (24, 64) durch Befestigen von einsteckbaren Befestigungselementen (54) an den aufnehmenden Befestigungskörpern (33).

2. Verfahren zur Befestigung nach Anspruch 1, wobei die wärmeleitende Paste (40) ein Silikonharz umfasst, das Aluminiumoxidpulver enthält.

3. Verfahren zur Befestigung nach einem der Ansprüche 1 und 2, wobei der einsteckbare Befestigungskörper (54) eine Stiftschraube (56) und mindestens einen Bolzen (58) umfasst.

4. Verfahren zur Befestigung nach einem der Ansprüche 1 bis 3, wobei der Schritt des Anbringens (38, 68) der wärmeleitenden Paste (40) auf dem kapillaren Wärmerohr (24, 64) durch das Aufbringen von Tropfen oder eines Fadens der wärmeleitenden Paste (40) durchgeführt wird und wobei die Menge der wärmeleitenden Paste (40), die auf das mindestens eine kapillare Wärmerohr (20, 36) aufgebracht wird, mindestens eineinhalbmal so groß wie die Menge der wärmeleitenden Paste (40) ist, die ausschließlich zum Füllen des Zwischenraums erforderlich ist, der sich zwischen dem kapillaren Wärmerohr (20, 36) und dem wärmeabführenden Ausrüstungsteil (42) befindet.

5. Verfahren zur Befestigung nach einem der Ansprüche 1 bis 4, welches außerdem einen Schritt (52, 74) des Wartens umfasst, bis sich die Viskosität der wärmeleitenden Paste (40) bis zu einem Schwellenwert erhöht hat.

6. Verfahren zur Befestigung nach einem der Ansprüche 1 bis 5, wobei die aufnehmenden Befestigungskörper (33) an der Platte (24) so befestigt werden, dass sie sich in Bezug auf das mindestens eine kapillare Wärmerohr (24, 36) vorstehend in einer Richtung (N) erstrecken, die zu einer Hauptseite (22) der Platte (24, 64) senkrecht ist.

7. Raumfahrzeugwand (60, 78), welche umfasst:

- eine Platte (24, 64),
- mindestens ein kapillares Wärmerohr (20, 36), das auf mindestens einem Teil der Platte (24, 64) angeordnet ist,
- aufnehmende Befestigungskörper (33), die so an der Platte (24, 64) befestigt sind, dass sie sich in Bezug auf das mindestens eine kapillare Wärmerohr (20, 36) vorstehend erstrecken,
- mindestens ein wärmeabführendes Ausrüstungsteil (42), das von den aufnehmenden Befestigungskörpern (33) getragen wird und in direktem Kontakt mit ihnen steht,
- eine Schicht (50) wärmeleitender und selbsthärtender Paste, die zwischen dem mindestens einen kapillaren Wärmerohr (20, 36) und dem wärmeabführenden Ausrüstungsteil (42) angeordnet ist, und
- ein einsteckbares Befestigungselement, das geeignet ist, das wärmeabführende Ausrüstungsteil an dem aufnehmenden Befestigungskörper zu befestigen.

8. Raumfahrzeugwand (60, 78) nach Anspruch 7, wobei die wärmeleitende Paste (40) ein Silikonharz umfasst, das Aluminiumoxidpulver enthält.

9. Raumfahrzeugwand (60, 78) nach einem der Ansprüche 7 und 8, wobei der einsteckbare Befestigungskörper (54) eine Stiftschraube (56) und mindestens einen Bolzen (58) umfasst.

10. Raumfahrzeugwand (60, 78) nach einem der Ansprüche 7 bis 9, wobei das mindestens eine kapillare Wärmerohr (20, 36) ein hohles Rohr (25) und zwei beiderseits des hohlen Rohres (25) angeordnete Stützplatten (27) umfasst und wobei die Stützplatten (27) eine Breite aufweisen, die im Wesentlichen gleich dem Durchmesser des hohlen Rohres (25) ist.

11. Raumfahrzeugwand (60, 78) nach einem der Ansprüche 7 bis 10, wobei sich der aufnehmende Befestigungskörper (33) in Bezug auf das mindestens eine kapillare Wärmerohr vorstehend in einer Richtung (N) erstreckt, die zu einer Hauptseite (22) der Platte (24, 64) senkrecht ist.

12. Raumfahrzeugwand (60, 78) nach einem der Ansprüche 7 bis 11, wobei der aufnehmende Befestigungskörper (33) mindestens einen Gewindeeinsatz (28) umfasst.

13. Raumfahrzeugwand (60, 78) nach einem der Ansprüche 7 bis 12, wobei das wärmeabführende Ausrüstungsteil (42) eines der folgenden Ausrüstungsteile ist: ein Verstärker, ein elektronisches Hochfrequenzbauteil, ein digitales elektronisches Bauteil, ein Prozessor, eine elektrische Stromversorgungsquelle.

**14.** Raumfahrzeug, welches mindestens eine Raumfahrzeugwand (60, 78) umfasst, die gemäß einem der Ansprüche 7 bis 13 ausgebildet ist.

## Claims

**1.** Attachment method for attaching a heat-emitting device (42) and a capillary heat pipe (20,201, 202) to a panel (24,64) of a spacecraft wall (60,78), said method comprising the following steps:

a) arranging (18,62) at least one capillary heat pipe (20,36) on at least a portion of the panel (24,64);
b) attaching (26,64) female attachment bodies (33) to the panel (24,64), the female attachment bodies (33) protruding relative to said at least one capillary heat pipe (20,36);
c) placing (38, 68) a thermally-conductive and self-curing paste (40) on at least a portion of the at least one capillary heat pipe (20,36) or on at least one heat-emitting device (42),
d) placing (46, 70) at least one heat-emitting device (42) on the thermally-conductive and self-curing paste (40) and on the female attachment bodies (33), said heat-emitting device (42) bearing against the female attachment bodies (33), said heat-emitting device (42) being in direct contact with the female attachment bodies (33), and
e) attaching (48, 72) the heat-emitting device (42) and said at least one capillary heat pipe (20,36) to the panel (24, 64) by attaching male attachment members (54) to the female attachment bodies (33).

**2.** Attachment method according to claim 1, wherein the thermally-conductive paste (40) comprises a silicone resin containing alumina powder.

**3.** Attachment method according to any of claims 1 and 2, wherein the male attachment body (54) comprises a stud (56) and at least one nut (58).

**4.** Attachment method according to any one of claims 1 to 3, wherein the step (38, 68) of placing the thermally-conductive paste (40) on the capillary heat pipe (24, 64) is carried out by depositing drops or a thin line of thermally-conductive paste (40), and wherein the amount of thermally-conductive paste (40) deposited on the at least one capillary heat pipe (20,36) is at least one and a half times greater than the amount of thermally-conductive paste (40) needed to fill only the space between the capillary heat pipe (20,36) and the heat-emitting device (42).

**5.** Attachment method according to any one of claims 1 to 4, further comprising a step (52, 74) of waiting for the viscosity of the thermally-conductive paste (40) to increase to a threshold value.

**6.** Attachment method according to any one of claims 1 to 5, wherein the female attachment bodies (33) are attached to the panel (24) so as to protrude relative to said at least one capillary heat pipe (24,36) in a direction (N) perpendicular to a main face (22) of the panel (24, 64).

**7.** Spacecraft wall (60, 78) comprising:

- a panel (24,64),
- at least one capillary heat pipe (20,36) arranged on at least a portion of the panel (24,64),
- female attachment bodies (33) attached to the panel (24,64) so as to protrude relative to said at least one capillary heat pipe (20,36),
- at least one heat-emitting device (42) carried by and in direct contact with said female attachment bodies (33),
- a layer (50) of thermally-conductive and self-curing paste arranged between said at least one capillary heat pipe (20,36) and the heat-emitting device (42), and
- a male attachment member suitable for attaching said heat-emitting device to the female attachment body.

**8.** Spacecraft wall (60, 78) according to claim 7, wherein the thermally-conductive paste (40) comprises a silicone resin containing alumina powder.

**9.** Spacecraft wall (60, 78) according to any one of claims 7 and 8, wherein the male attachment body (54) comprises a stud (56) and at least one nut (58).

**10.** Spacecraft wall (60, 78) according to any one of claims 7 to 9, wherein said at least one capillary heat pipe (20,36) comprises a hollow tube (25) and two support plates (27) arranged one on either side of the hollow tube (25), and wherein said support plates (27) have a width substantially equal to the diameter of the hollow tube (25).

**11.** Spacecraft wall (60, 78) according to any one of claims 7 to 10, wherein the female attachment body (33) protrudes relative to said least one capillary heat pipe in a direction (N) perpendicular to a main face (22) of the panel (24, 64).

**12.** Spacecraft wall (60, 78) according to any one of claims 7 to 11, wherein the female attachment body (33) comprises at least one threaded insert (28).

**13.** Spacecraft wall (60, 78) according to any one of claims 7 to 12, wherein said heat-emitting device (42) is a device among: an amplifier, a radio frequency electronic component, a digital electronic component, a processor, an electrical power supply.

14. Spacecraft comprising at least one spacecraft wall (60, 78) arranged according to any one of claims 7 to 13.

FIG. 1

FIG. 2

FIG. 3

FIG. 4

FIG. 5

FIG. 6

FIG. 7

**FIG. 8**

**FIG. 9**

FIG. 10

FIG. 11

FIG. 12

**FIG. 13**

**RÉFÉRENCES CITÉES DANS LA DESCRIPTION**

**Documents brevets cités dans la description**

- US 2015122454 A1
- US 2013233516 A1
- US 5735489 A
- FR 2735565 A1